# FASCICULE DE BREVET EUROPEEN

(11) **EP 2 751 445 B1**
(45) Date de publication et mention de la délivrance du brevet: **27.04.2016**
(21) Numéro de dépôt: 12728652.4
(22) Date de dépôt: 11.05.2012
(51) Int. Cl.: F16F 7/00, F16F 7/12, B60R 19/34, B60R 21/04, B61F 19/04, B61G 11/16

(54) **DISPOSITIF D'ABSORPTION D'ÉNERGIE LORS D'UN CHOC LATÉRAL POUR PORTE DE VÉHICULE AUTOMOBILE**
VORRICHTUNG ZUR ENERGIEABSORPTION BEI EINEM SEITENAUFPRALL FÜR EINE KRAFTFAHRZEUGTÜR
DEVICE FOR ABSORBING ENERGY IN A SIDE IMPACT FOR A MOTOR VEHICLE DOOR

(30) Priorité: 06.07.2011 FR 1156097
(43) Date de publication de la demande: 09.07.2014
(73) Titulaire: Renault S.A.S., 92100 Boulogne-Billancourt (FR)
(72) Inventeur: BOUILLON, Jean-Charles, F-78940 La Queue en Yvelines (FR); YAOUANC, Kevin, F-92100 Boulogne Billancourt (FR)
(86) Numéro de dépôt international: PCT/FR2012/051041
(87) Numéro de publication internationale: WO 2013/004929

(56) Documents cités:
- EP-A1- 0 863 056
- EP-A1- 2 112 025
- FR-A1- 2 784 151
- FR-A1- 2 910 410
- JP-A- 2009 126 182
- US-A1- 2002 185 795
- US-A1- 2003 184 070

## Description

L'invention concerne un dispositif d'absorption d'énergie lors d'un choc latéral pour porte de véhicule automobile, comportant un panneau d'habillage depuis la surface duquel s'étendent des absorbeurs creux en forme de cônes tronqués présentant une petite base portée par le panneau d'habillage, une grande base, opposée à la petite base, et une paroi périphérique, reliant la petite et la grande base, apte à se déformer sous l'effet du choc latéral.

Afin de protéger les occupants du véhicule en cas de choc latéral, des panneaux sont généralement agencés dans les portes, de façon à absorber l'énergie du choc.

Il est connu d'utiliser des panneaux munis de cônes tronqués creux aptes à se déformer sous l'effet d'un choc de façon à en absorber l'énergie.

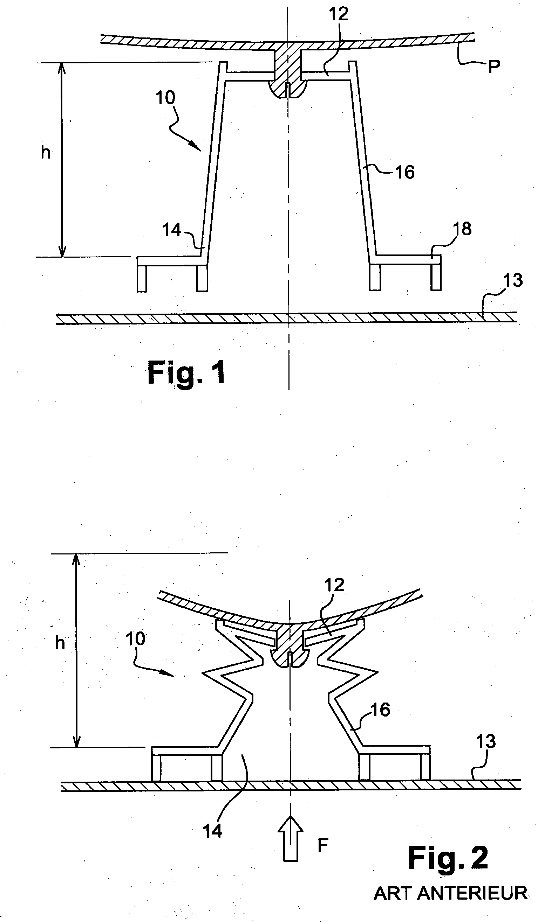

Aux figures 1 et 2, est représenté un détail d'un dispositif d'absorption d'énergie selon l'état de la technique comprenant un panneau d'habillage de porte p depuis lequel se dressent une pluralité d'absorbeurs destinés à s'écraser sous l'effet d'un choc.

Un seul absorbeur 10 a été représenté aux figures 1 et 2.

L'absorbeur 10 présente la forme d'un cône tronqué creux de hauteur h comportant une petite base 12, fixée sur le panneau p et une grande base 14, opposée à la petite base 12, et située en regard d'un panneau de tôle 13 de porte. La grande base 14, dite base de stabilisation, comporte un rebord périphérique extérieur 18 destiné à stabiliser le cône tronqué lorsque la tôle 13 se déforme sous l'effet d'un choc latéral appliqué sur le panneau 13 et représenté par la flèche F.

Le cône tronqué 10 comporte une paroi périphérique 16 présentant une épaisseur constante

Afin de faciliter la compréhension de la description, il est pris comme convention que la grande base correspond au bas de la figure et que la petite base correspond au haut de la figure.

Le document FR-B1-2784151 décrit un tel dispositif.

Cependant, ce type de dispositif présente des inconvénients. Ainsi, tel que représenté à la figure 2, un tel absorbeur n'absorbe généralement de l'énergie que dans les deux tiers supérieurs de sa hauteur h, en ne formant alors que deux plis dans cette zone. Le tiers inférieur de sa hauteur restant présente une raideur trop grande pour pouvoir se déformer. Ce tiers inférieur ne se déforme donc pas ou bien très peu, et de plus de façon peu efficace lors d'un choc.

Par conséquent, ce type d'absorbeur ne permet pas d'absorber suffisamment d'énergie et nécessite une mise au point longue et coûteuse concernant l'épaisseur des parois ders absorbeurs et leur positionnement afin de trouver le meilleur compromis permettant d'absorber de l'énergie rapidement sans pour autant arriver trop tôt dans la zone raide.

Afin de pallier ces inconvénients, l'invention a pour objet un dispositif d'absorption d'énergie lors d'un choc latéral permettant d'augmenter le rendement de l'absorption du choc et d'améliorer la stabilité des absorbeurs.

L'invention a aussi pour objet un dispositif d'absorption permettant de diminuer les coûts de développement ainsi que de réaliser des gains d'encombrement.

A cet effet, l'invention propose un dispositif d'absorption d'un choc latéral du type cité cidessus, caractérisé en ce que la paroi périphérique de chaque cône présente une épaisseur qui varie entre la petite et la grande base, de façon que, lors d'une déformation sous l'effet du choc, la paroi s'écrase en formant trois plis compris dans des plans orthogonaux à une hauteur du cône tronqué.

Selon d'autres caractéristiques de l'invention:
- La paroi périphérique de l'absorbeur présente trois zones annulaires d'épaisseurs distinctes.
- La paroi périphérique de l'absorbeur présente une zone de travail jouxtant la petite base et une zone d'affaiblissement jouxtant la grande base, reliées entre elles par une zone de transition centrale, l'épaisseur de la paroi dans la zone de travail étant supérieure à l'épaisseur de la paroi dans la zone d'affaiblissement de façon que, lors du choc, il se forme deux plis dans la zone de travail et dans la zone de transition et un pli dans la zone d'affaiblissement.
- L'épaisseur de la paroi dans la zone de transition varie continûment.
- L'épaisseur de la paroi dans la zone d'affaiblissement est comprise entre 10 et 30 % de l'épaisseur de la paroi dans la zone de travail.
- La zone de travail et la zone de transition représentent sensiblement les deux tiers de la hauteur de l'absorbeur et la zone d'affaiblissement représente un tiers de la hauteur de l'absorbeur.
- La paroi présente une pente identique dans la zone de travail, dans la zone de transition et dans la zone d'affaiblissement.
- La paroi présente une pente plus forte dans la zone de travail et dans la zone de transition que dans la zone d'affaiblissement.

D'autres caractéristiques et avantages de l'invention apparaîtront à la lecture de la description d'exemples de réalisation d'un dispositif d'absorption d'un choc latéral en référence aux dessins annexés dans lesquels :
- La figure 1 est une vue d'un détail d'un dispositif d'absorption selon l'état de la technique avant un choc
- La figure 2 est une vue d'un détail du dispositif selon l'état de la technique de la figure 1 après le choc.
- La figure 3 est une vue d'un détail du dispositif d'absorption selon l'invention avant un choc.
- La figure 4 est une vue d'un détail du dispositif d'absorption selon l'invention après un choc.
- La figure 5 est une vue d'un détail d'un autre mode de réalisation du dispositif d'absorption selon l'invention.

Dans la description qui suit, nous prendrons à titre non limitatif comme convention une orientation verticale correspondant à la direction de la hauteur H.

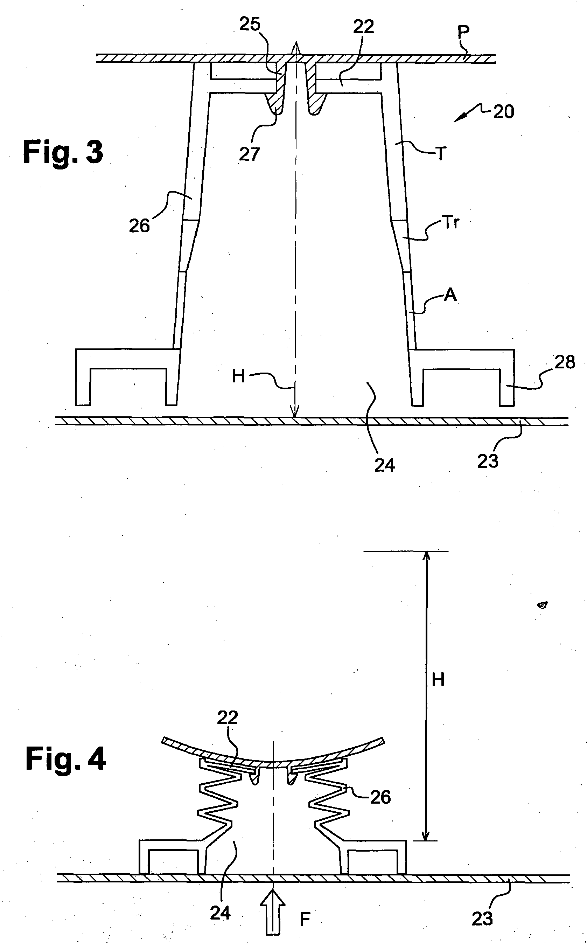

Tel que représenté à la figure 3, un dispositif d'absorption selon l'invention comporte un panneau d'habillage de porte P depuis lequel s'étendent une pluralité d'absorbeurs 20. Sur les figures 3 et 4, seul un absorbeur est représenté.

L'absorbeur 20 présente la forme d'un cône tronqué creux de hauteur H présentant une petite base 22 portée par le panneau d'habillage P et une grande base 24, opposée à la grande base 22. La petite base 22 est fermée et présente un orifice central 25 destiné à sa fixation sur le panneau d'habillage P au moyen, par exemple, d'un clip 27.

La grande base 24, ouverte, présente un rebord périphérique 28 extérieur et se trouve en regard d'un panneau de tôle 23 de la porte.

L'absorbeur 20 comporte de plus une paroi périphérique 26, s'étendant entre la grande base 22 et la petite base 24 qui présente une épaisseur qui n'est pas constante entre la petite base 22 et la grande base 24.

La paroi 26 comporte ainsi trois zones annulaires distinctes d'épaisseurs différentes.

Une première zone annulaire, jouxtant la grande base 22, est appelée zone d'affaiblissement A.

Une deuxième zone annulaire, jouxtant la petite base 24, est appelée zone de travail T.

La zone d'affaiblissement A et la zone de travail T sont reliées entre elles par une zone annulaire centrale dite de transition Tr.

L'épaisseur de la paroi 26 dans la zone d'affaiblissement A est inférieure à celle de la paroi 26 dans la zone de travail T. Ainsi, l'épaisseur de la paroi dans la zone d'affaiblissement A peut représenter 10 à 30% de l'épaisseur de la paroi 26 dans la zone de travail T, l'épaisseur de la paroi 26 dans la zone de travail T pouvant être de l'ordre de quelques millimètres (typiquement 1,6 à 3 millimètres).

L'épaisseur de la paroi 26 dans la zone de transition varie quant à elle continûment, l'épaisseur de la paroi 26 à la limite supérieure de la zone de transition étant sensiblement égale à l'épaisseur de la paroi 26 dans la zone de travail et l'épaisseur de la paroi 26 à la limite inférieure de la zone de transition Tr étant sensiblement égale à l'épaisseur de la paroi 26 dans la zone d'affaiblissement A.

La surface externe de la paroi 26 présente, dans toutes les zones de l'absorbeur, une pente identique.

La surface extérieure de la paroi 26 présente ainsi un aspect uni quelle que soit l'épaisseur de la paroi 26.

Cependant, l'inverse est également réalisable, la surface interne de la paroi 26 présentant alors une pente identique dans toutes les zones de l'absorbeur tandis que sa surface externe présente des pentes différentes.

L'épaisseur de la paroi périphérique 26 diminue de la petite base 24 vers la grande base 22.

Enfin, la zone de travail T et la zone de transition Tr correspondent à environ les deux tiers supérieurs de la hauteur H du cône tronqué, tandis que la zone d'affaiblissement A correspond à environ un tiers inférieur de la hauteur H du cône tronqué.

Tel que représenté à la figure 4, l'absorbeur 20 a subi une déformation après un choc latéral appliqué sur le panneau en tôle 23 et représenté par la flèche F.

Lors d'un tel choc, le panneau en tôle 23 entre en contact avec la grande base 24 de l'absorbeur 20, le rebord périphérique 28 contribuant à stabiliser l'absorbeur 20 pendant le choc. L'absorbeur 20 est donc repoussé en direction du passager du véhicule jusqu'à ce que sa petite base 22 entre en contact avec le bassin dudit passager.

Après le choc, l'absorbeur 20 s'est déformé en formant trois plis se situant dans des plans orthogonaux à la hauteur H.

Deux plis se sont formés dans la zone de travail T et dans la zone de transition Tr tandis qu'un troisième pli s'est également formé dans la zone d'affaiblissement A.

La hauteur de l'absorbeur 20 après choc est alors réduite par rapport à l'absorbeur de l'état de la technique en raison de la déformation du tiers inférieur du cône tronqué.

A hauteur équivalente, le rendement de l'absorbeur selon l'invention, c'est-à-dire sa capacité à absorber un choc, se trouve alors augmenté par rapport à l'absorbeur de l'état de la technique.

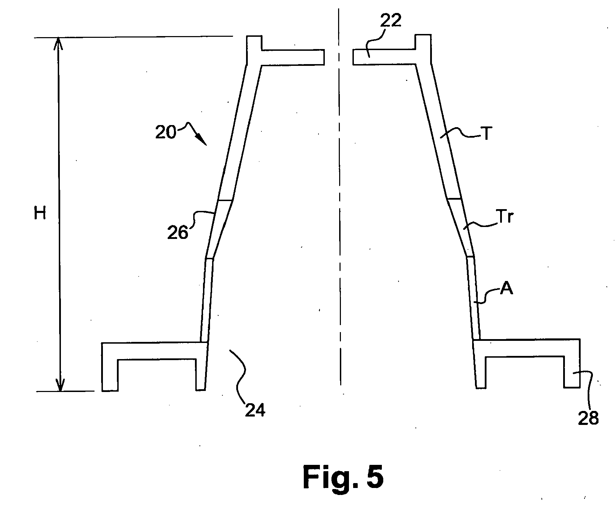

Dans le deuxième mode de réalisation représenté à la figure 5, les zones de travail T et de transition Tr présentent une pente plus forte que celle de la zone d'affaiblissement. La surface externe de la paroi périphérique 26 présente donc une cassure à la limite entre la zone d'affaiblissement A et la zone de transition Tr.

La présence d'une pente plus forte pour les zones de travail T et de transition Tr permet d'améliorer le démoulage, tandis qu'une pente plus faible au niveau de la zone d'affaiblissement A permet d'assurer la stabilité de l'absorbeur.

Le dispositif d'absorption selon l'invention présente ainsi plusieurs avantages.
- Le processus d'écrasement de l'absorbeur est plus stable, c'est-à-dire plus uniforme, en raison de la déformation opérée dans la zone d'affaiblissement .Cette plus grande stabilité permet ainsi de limiter les risques de déversement de l'absorbeur qui peuvent contribuer à dégrader le rendement.
- Le rendement de la déformation et donc de l'absorption de l'énergie du choc est augmenté de 20 à 30%.
- Les coûts de développement peuvent être réduits car la hauteur des absorbeurs pouvant être diminuée, les absorbeurs sont alors moins dépendants du design du véhicule. Ils peuvent ainsi être l'objet de calculs très en amont, même si le design du véhicule n'est pas encore figé.
- Le gain de place peut être augmenté car de tels absorbeurs peuvent être intégrés dans des espaces plus petits. Dans le cas où ils sont utilisés dans des espaces de taille habituelle, l'espace libéré tout autour peut être utilisé pour intégrer d'autres fonctionnalités.

## Revendications

1. Dispositif d'absorption d'énergie lors d'un choc latéral pour porte de véhicule automobile, comportant un panneau d'habillage (P) depuis la surface duquel s'étendent des absorbeurs creux (20) en forme de cônes tronqués présentant une petite base (22) portée par le panneau d'habillage (P), une grande base (24), opposée à la petite base (22), et une paroi périphérique (26), reliant la petite (22) et la grande base (24), apte à se déformer sous l'effet du choc latéral, **caractérisé en ce que** la paroi périphérique (26) de chaque cône présente une épaisseur qui varie entre la petite (22) et la grande base (24), de façon que, lors d'une déformation sous l'effet du choc, la paroi périphérique (26) s'écrase en formant trois plis compris dans des plans orthogonaux à une hauteur (H) du cône tronqué.

2. Dispositif d'absorption selon la revendication précédente, **caractérisé en ce que** la paroi périphérique (26) de l'absorbeur (20) présente trois zones annulaires d'épaisseurs distinctes (A, T, Tr).

3. Dispositif d'absorption selon la revendication précédente, **caractérisé en ce que** la paroi périphérique (26) de l'absorbeur (20) présente une zone de travail (T) jouxtant la petite base (22) et une zone d'affaiblissement (A) jouxtant la grande base (24), reliées entre elles par une zone de transition (Tr), l'épaisseur de la paroi (26) dans la zone de travail (T) étant supérieure à l'épaisseur de la paroi (26) dans la zone d'affaiblissement (A) de façon que, lors du choc, il se forme deux plis dans la zone de travail (T) et dans la zone de transition (Tr) et un pli dans la zone d'affaiblissement (A).

4. Dispositif d'absorption selon la revendication précédente, **caractérisé en ce que** l'épaisseur de la paroi (26) dans la zone de transition (Tr) varie continûment.

5. Dispositif d'absorption selon l'une des revendications 3 ou 4, **caractérisé en ce que** l'épaisseur de la paroi (26) dans la zone d'affaiblissement (A) est comprise entre 10 et 30 % de l'épaisseur de la paroi (26) dans la zone de travail (T).

6. Dispositif d'absorption selon l'une des revendications 3 à 5, **caractérisé en ce que** la zone de travail (T) et la zone de transition (Tr) représentent sensiblement les deux tiers de la hauteur (H) de l'absorbeur (20) et la zone d'affaiblissement (A) représente un tiers de la hauteur (H) de l'absorbeur (20).

7. Dispositif d'absorption selon l'une des revendications 3 à 6, **caractérisé en ce que** la paroi (26) présente une pente identique dans la zone de travail (T), dans la zone de transition (Tr) et dans la zone d'affaiblissement (A).

8. Dispositif d'absorption selon l'une des revendications 3 à 6, **caractérisé en ce que** la paroi (26) présente une pente plus forte dans la zone de travail (T) et dans la zone de transition (Tr) que dans la zone d'affaiblissement (A).

## Patentansprüche

1. Vorrichtung zur Absorption von Energie bei einem Seitenaufprall für eine Kraftfahrzeugtür, aufweisend eine Verkleidungsplatte (P), von deren Oberfläche aus sich hohle Dämpfer (20) in Form von Kegelstümpfen erstrecken, welche eine von der Verkleidungsplatte (P) getragenen kleine Basis (22), eine der kleinen Basis (22) gegenüberliegende große Basis (24) und eine Umfangswand (26) aufweisen, welche die kleine (22) und die große Basis (24) verbindet, und welche geeignet sind, sich unter der Einwirkung des seitlichen Aufpralls zu verformen, **dadurch gekennzeichnet, dass** die Umfangswand (26) eines jeden Kegels eine Dicke aufweist, welche sich zwischen der kleinen (22) und der großen Basis (24) derartig ändert, dass bei einer Verformung unter der Einwirkung des Aufpralls die Umfangswand (26) sich zusammendrückt, indem sie drei Knicke bildet, welche in Ebenen senkrecht zu einer Höhe (H) des Kegelstumpfes liegen.

2. Absorptionsvorrichtung nach dem vorhergehenden Anspruch, **dadurch gekennzeichnet, dass** die Umfangswand (26) des Dämpfers (20) drei ringförmige Bereiche mit verschiedenen Dicken (A, T, Tr) aufweist.

3. Absorptionsvorrichtung nach dem vorhergehenden Anspruch, **dadurch gekennzeichnet, dass** die Umfangswand (26) des Dämpfers (20) einen Arbeitsbereich (T), welcher an die kleine Basis (22) angrenzt, und einen Schwächungsbereich (A) aufweist, welcher an die große Basis (24) angrenzt, welche durch einen Übergangsbereich (Tr) miteinander verbunden sind, wobei die Dicke der Wand (26) im Arbeitsbereich (T) derartig größer als die Dicke der Wand (26) im Schwächungsbereich (A) ist, dass sich bei dem Aufprall zwei Knicke im Arbeitsbereich (T) und im Übergangsbereich (Tr) und ein Knick im Schwächungsbereich (A) bilden.

4. Absorptionsvorrichtung nach dem vorhergehenden Anspruch, **dadurch gekennzeichnet, dass** sich die Dicke der Wand (26) im Übergangsbereich (Tr) kontinuierlich ändert.

5. Absorptionsvorrichtung nach einem der Ansprüche 3 oder 4, **dadurch gekennzeichnet, dass** die Dicke der Wand (26) im Schwächungsbereich (A) zwischen 10 und 30% der Dicke der Wand (26) im Arbeitsbereich (T) liegt.

6. Absorptionsvorrichtung nach einem der Ansprüche 3 bis 5, **dadurch gekennzeichnet, dass** der Arbeitsbereich (T) und der Übergangsbereich (Tr) im Wesentlichen zwei Drittel der Höhe (H) des Dämpfers (20) darstellen und der Schwächungsbereich (A) ein Drittel der Höhe (H) des Dämpfers (20) darstellt.

7. Absorptionsvorrichtung nach einem der Ansprüche 3 bis 6, **dadurch gekennzeichnet, dass** die Wand (26) im Arbeitsbereich (T), im Übergangsbereich (Tr) und im Schwächungsbereich (A) eine identische Neigung aufweist.

8. Absorptionsvorrichtung nach einem der Ansprüche 3 bis 6, **dadurch gekennzeichnet, dass** die Wand (26) im Arbeitsbereich (T) und im Übergangsbereich (Tr) eine stärkere Neigung als im Schwächungsbereich (A) aufweist.

## Claims

1. Device for absorbing energy in a side impact for a motor vehicle door, comprising a cladding panel (P) from the surface of which extend hollow absorbers (20) in the form of truncated cones having a small base (22) borne by the cladding panel (P), a large base (24) opposite the small base (22), and a peripheral wall (26) linking the small (22) and the large (24) bases, suitable for being deformed under the effect of the side impact **characterized in that** the peripheral wall (26) of each cone has a thickness which varies between the small (22) and the large (24) bases, so that, upon a deformation under the effect of the impact, the peripheral wall (26) crumples, forming three pleats contained in planes that are orthogonal to a height (H) of the truncated cone.

2. Absorption device according to the preceding claim **characterized in that** the peripheral wall (26) of the absorber (20) has three annular zones of distinct thicknesses (A, T, Tr).

3. Absorption device according to the preceding claim, **characterized in that** the peripheral wall (26) of the absorber (20) has a working zone (T) adjacent to the small base (22) and a weakening zone (A) adjacent to the large base (24), which are interlinked by a transition zone (Tr), the thickness of the wall (26) in the working zone (T) being greater than the thickness of the wall (26) in the weakening zone (A) so that, upon an impact, two pleats are formed in the working zone (T) and in the transition zone (Tr) and one pleat is formed in the weakening zone (A).

4. Absorption device according to the preceding claim, **characterized in that** the thickness of the wall (26) in the transition zone (Tr) varies continually.

5. Absorption device according to either of Claims 3 and 4, **characterized in that** the thickness of the wall (26) in the weakening zone (A) is between 10 and 30% of the thickness of the wall (26) in the working zone (T).

6. Absorption device according to one of Claims 3 to 5, **characterized in that** the working zone (T) and the transition zone (Tr) represent substantially two thirds of the height (H) of the absorber (20) and the weakening zone (A) represents a third of the height (H) of the absorber (20).

7. Absorption device according to one of Claims 3 to 6, **characterized in that** the wall (26) has an identical slope in the working zone (T), in the transition zone (Tr) and in the weakening zone (A).

8. Absorption device according to one of Claims 3 to 6, **characterized in that** the wall (26) has a slope that is greater in the working zone (T) and in the transition zone (Tr) than in the weakening zone (A).
